# EUROPÄISCHE PATENTANMELDUNG

(11) **EP 3 764 221 A1**
(43) Veröffentlichungstag der Anmeldung: **13.01.2021**
(21) Anmeldenummer: 19185732.5
(22) Anmeldetag: 11.07.2019
(51) Int. Cl.: G06F 8/65, G05B 19/04, G05B 19/418, G06F 11/34

(54) **VERFAHREN ZUM AKTUALISIEREN VON SOFTWARE FÜR EIN AUTOMATISIERUNGSSYSTEM, STEUEREINRICHTUNG FÜR EIN AUTOMATISIERUNGSSYSTEM UND AUTOMATISIERUNGSSYSTEM MIT EINER STEUEREINRICHTUNG**

(71) Anmelder: Siemens Aktiengesellschaft, 80333 München (DE)
(72) Erfinder: Köpke, Alexander, 90763 Fürth (DE)

(57) **Zusammenfassung**

Es wird ein Verfahren zum Aktualisieren von Software für ein Automatisierungssystem vorgeschlagen, in dem zumindest eine Automatisierungseinrichtung mit Hilfe von einer in Abhängigkeit von einem Steuerungsalgorithmus betriebenen Steuereinrichtung gesteuert ist, wobei der Steuerungsalgorithmus durch Steuerungsparameter anpassbar ist und die Steuereinrichtung Steuerdaten erzeugt, wobei die Software in Abhängigkeit von den Sensor- und Steuerdaten Korrekturdaten zur Anpassung der Steuerungsparameter und/oder des Steuerungsalgorithmus erzeugt. Das Verfahren umfasst die Schritte:
Ausführen einer aktualisierten oder veränderten Version der Applikation in einem abgesicherten Bereich einer Datenverarbeitungseinrichtung mit historischen Prozessdaten zum Erzeugen von Prüfkorrekturdaten;
Vergleichen der Prüfkorrekturdaten mit von der Applikation erzeugten Korrekturdaten zum Erzeugen eines Vergleichsergebnisses; und
Austauschen der Applikation mit der aktualisierten oder veränderten Version der Applikation in Abhängigkeit von dem Vergleichsergebnis und Betreiben des Automatisierungssystems mit der aktualisierten oder veränderten Version der Applikation.

## Beschreibung

Diese Anmeldung betrifft ein Verfahren sowie ein Computerprogrammprodukt zum Aktualisieren von Software für ein Automatisierungssystem. Des Weiteren betrifft diese Anmeldung eine Steuereinrichtung für ein Automatisierungssystem sowie ein Automatisierungssystem mit einer Steuereinrichtung.

Die Fertigung oder die Herstellung von Produkten und/oder Werkstücken durch ein Automatisierungssystem hängt von unterschiedlichen Faktoren, wie Temperatur, Licht, Qualität der Produkte und/oder Werkstücke, Tageszeit, etc., ab.

Das Ziel bei der Herstellung von Produkten oder bei dem Betrieb des Automatisierungssystems ist es, möglichst optimale Ergebnisse, wie beispielsweise wenig Ausschuss, einen hohen Durchsatz oder eine hohe Qualität des hergestellten Produkts zu erzielen. Im Stand der Technik wird hierbei durch verschiedene Optimierungsstrategien in das Automatisierungssystem eingegriffen, um möglichst gute Ergebnisse zu erzielen.

Beispielsweise kann die Software einer Steuereinrichtung, wie eine speicherprogrammierbare Steuerung, für eine Automatisierungseinrichtung, wie eine Maschine, in einem Automatisierungssystem optimiert werden, indem eine Regelung basierend auf Expertenwissen und aktuellen Eingabe-/Ausgabedaten von Prozessdaten implementiert wird. Weiterhin kann eine Optimierung über ein Bedien- und Beobachtungspanel vorgenommen werden. Dabei werden einem Benutzer (Operator) verschiedene Prozessdaten angezeigt und die Möglichkeit der Einflussnahme gegeben. Der Operator verfügt meist über Erfahrung und weiß daher wie er welche Prozessdaten modifizieren kann, um verbesserte Ergebnisse zu erreichen.

Aus dem Stand der Technik im Kontext der Industrie 4.0 existieren automatische Optimierungen oder Optimierungsstrategien. Dabei kann eine Software (Applikation) basierend auf einen Model die Steuereinrichtung einer Automatisierungseinrichtung beeinflussen. Die Applikation ist dabei mit der Steuereinrichtung verbunden, wobei die Steuereinrichtung mit einem Edge-Gerät verbunden ist. Das Edge-Gerät ist wiederum mit einer Cloud verbunden. Durch diese kommunikativen Verbindungen wird die Applikation mit Prozessdaten von der Steuereinrichtung versorgt und kann anhand ihres zugrunde liegenden Models Entscheidungen treffen und diese an die Steuereinrichtung kommunizieren. Die automatische Optimierung tritt dadurch ein, dass das Edge-Gerät die Prozessdaten sammelt und in die Cloud schickt, in welcher unter Zuhilfenahme von maschinellem Lernen die Prozessdaten analysiert werden und ein neues Modell der Applikation erzeugt wird.

In manchen Betriebssituation kann es zu defekten Produkten oder Werkstücken, beispielsweise auf einem Förderband, kommen, wodurch ein händischer Eingriff und Stopps von Teilen des Automatisierungssystems erforderlich sind.

Eine verbesserte Ansteuerung und Optimierung von Automatisierungsvorgängen kann durch einen Austausch, ein Upgrade oder eine Aktualisierung von Steuerungsalgorithmen, die als computerimplementiert ausführbare Applikationen vorliegen, erfolgen.

Zum Austauschen einer älteren Applikation mit einer neueren Applikation im Software-Umfeld erfolgt beispielsweise über ein sog. "Safe Deployment". Dabei wird in einem ersten Container eine Version N einer Applikation ausgeführt und alle Anfragen an diese Applikation bearbeitet. Währenddessen wird parallel Version N+1 der Applikation in einem zweiten Container gestartet. Erst wenn der zweite Container komplett gestartet ist, werden die Anfragen auf den zweiten Container umgeleitet. Sobald der erste Container keine Anfragen mehr beantwortet kann dieser beendet werden.

Wenn in einem webbasierten System, wie beispielsweise einem "Safe-Deployment" in der Cloud, jedoch eine "defekte" App verwendet wird, ist es ggf. erforderlich, dass der Benutzer die Webseite aktualisieren muss. Es ist insbesondere wünschenswert, sichere Maßnahmen zum Verändern eines Steuerungsalgorithmus während des Betriebs eines Automatisierungssystems bereitzustellen.

Vor diesem Hintergrund besteht eine Aufgabe der vorliegenden Erfindung darin, Mittel bereitzustellen, um die Aktualisierung einer Software zur Steuerung einer Automatisierungseinrichtung zu verbessern.

Gemäß einem ersten Aspekt wird ein Verfahren zum Aktualisieren von Software für ein Automatisierungssystem vorgeschlagen, in dem zumindest eine Automatisierungseinrichtung mit Hilfe von einer in Abhängigkeit von einem Steuerungsalgorithmus betriebenen Steuereinrichtung gesteuert ist, wobei der Steuerungsalgorithmus durch Steuerungsparameter anpassbar ist und die Steuereinrichtung in Abhängigkeit von Sensordaten Steuerdaten für die Automatisierungseinrichtung erzeugt, wobei die Software in der Art einer Applikation implementiert ist, welche in Abhängigkeit von den Sensor- und Steuerdaten (Prozessdaten) Korrekturdaten zur Anpassung der Steuerungsparameter und/oder des Steuerungsalgorithmus erzeugt. Das Verfahren umfasst die Schritte:
Ausführen einer aktualisierten oder veränderten Version der Applikation in einem abgesicherten Bereich einer Datenverarbeitungseinrichtung mit historischen Prozessdaten zum Erzeugen von Prüfkorrekturdaten;
Vergleichen der Prüfkorrekturdaten mit von der Applikation erzeugten Korrekturdaten, welche mit Hilfe der Applikation aus den historischen Prozessdaten erzeugt wurden, zum Erzeugen eines Vergleichsergebnisses; und
Austauschen der Applikation mit der aktualisierten oder veränderten Version der Applikation in Abhängigkeit von dem Vergleichsergebnis und Betreiben des Automatisierungssystems mit der aktualisierten oder veränderten Version der Applikation.

Durch das bereitgestellte Verfahren wird ein sicheres und fehlerfreies Austauschen einer Applikation mit der aktualisierten oder veränderten Version der Applikation für eine Automatisierungseinrichtung eines Automatisierungssystem erreicht, während gleichzeitig eine automatische Optimierung der Ansteuerung der Automatisierungseinrichtung durch die aktualisierte oder veränderte Version der Applikation durchgeführt wird.

Dies hat den Vorteil, dass durch die automatische Optimierung der Ansteuerung Fehler während der Produktion in dem Automatisierungssystem oder während des Betriebes in der Automatisierungseinrichtung erkannt und durch die Aktualisierung der Applikation zu einer neueren Version (aktualisierten oder veränderten Version der Applikation) mittels einer Anpassung der Steuerungsparameter und/oder des Steuerungsalgorithmus durch die neueren Version behoben werden. Dies erhöht die Qualität der Produktion, verringert den Wartungsaufwand, erhöht die Stabilität des Betriebs des Automatisierungssystems und verringert gleichzeitig die Häufigkeit des Eingreifens eines menschlichen Operators in das Automatisierungssystem.

Wenn ein Austauschen der Applikation mit der aktualisierten oder veränderten Version der Applikation erforderlich ist, wird dieses Austauschen vorzugsweise nur stufenweise durchgeführt, wobei in jeder Aktualisierungsstufe die aktualisierte oder veränderte Version der Applikation in Abhängigkeit eines Leistungsparameters validiert wird. Die Validierung prüft, ob bei der Verarbeitung der jeweiligen Stufe der aktualisierten oder veränderten Version der Applikation die gewünschten aktuellen Prüfkorrekturdaten als Ergebnis der Verarbeitung erhalten werden.

Dies hat den technischen Effekt, dass noch bevor die Applikation als Ganzes durch die aktualisierte oder veränderte Version der Applikation ausgetauscht wird, stufenweise geprüft wird, ob die aktualisierte oder veränderte Version der Applikation unter Belastung aktuelle Prüfkorrekturdaten erzeugt, welche mit den von der Applikation erzeugten aktuellen Korrekturdaten übereinstimmen. Dadurch wird in vorteilhafterweise sichergestellt, dass die aktualisierte oder veränderte Version der Applikation auch unter Belastung fehlerfrei arbeitet und ausgeführt wird. Infolgedessen wird die Performance des Automatisierungssystems erhöht, der Wartungsaufwand verringert während gleichzeitig die Stabilität des Betriebes der Automatisierungssystems erhöht wird.

Eine Software (Applikation) ist insbesondere eine Computeranwendung oder eine Anwendungssoftware. Die Anwendungssoftware ist vorzugsweise ein Computerprogramm, dass zur Verarbeitung oder Implementierung einer nützlichen oder gewünschten Nicht-Betriebssystemfunktionalität verwendet wird. Vorzugsweise wird die Applikation in dem Automatisierungssystem dazu verwendet, um Prozessdaten, welche die Applikation von der Steuereinrichtung erhält, zu verarbeiten und als Resultat der Verarbeitung Korrekturdaten zu erzeugen.

Korrekturdaten oder erzeugte Korrekturdaten umfassen insbesondere Daten zum Korrigieren zumindest eines Steuerungsparameters und/oder des Steuerungsalgorithmus. Vorzugsweise werden die Korrekturdaten an die Steuereinrichtung weitergegeben, welche wiederum einen Steuerbefehl (Steuerungsalgorithmus) an die Automatisierungseinrichtung weiterleitet, um zumindest einen Arbeitsvorgang, zumindest einen Arbeitsprozess und/oder die Ansteuerung zumindest eines Aktuators der Automatisierungseinrichtung zu optimieren. Die Korrekturdaten werden beispielsweise auf Basis von historischen Prozessdaten erzeugt, in welchen ein Fehler in der Automatisierungseinrichtung oder bei der Ansteuerung der Automatisierungseinrichtung aufgetreten ist, um mittels der erzeugten Korrekturdaten diesen Fehler in einer neueren Version der Applikation zu beheben.

Prozessdaten umfassen vorzugsweise Sensordaten und Steuerdaten, wobei die Sensordaten von Sensoren der zumindest einen Automatisierungseinrichtung bereitgestellt werden. Die Steuerdaten dienen zur Ansteuerung eines Aktuators einer Automatisierungseinrichtung.

Ein Automatisierungssystem wird insbesondere dazu eingesetzt, um Arbeitsvorgänge oder Arbeitsprozesse in und von Maschinen, Anlagen oder technischen Systemen zu automatisieren. Ein technisches System umfasst vorzugsweise eine Produktionsanlage oder eine Fabrikanlage zum Herstellen zumindest eines Produktes oder Werkstücks. Ein Arbeitsprozess, welcher automatisiert werden kann, ist beispielsweise ein Messen, ein Steuern, ein Regeln, Datenkommunikation zwischen zwei Automatisierungseinrichtungen und/oder Mensch-Maschine-Schnittstellen.

Eine Automatisierungseinrichtung ist insbesondere eine Maschine. Die Maschine ist vorzugsweise eine technische Vorrichtung mit durch ein **Antriebssystem** bewegten Teilen wie Aktuatoren. Die Maschine ist beispielsweise dazu eingerichtet, zugeführte Energie in Bewegung umzusetzen und/oder eine Bearbeitung eines Materials, wie bohren, drehen, fräsen, heben, senken, schneiden, waschen, messen, transportieren und/oder saugen durchzuführen. Die Automatisierungseinrichtung ist insbesondere ein Industrieroboter oder ein Förderband.

Der Arbeitsvorgang oder der Arbeitsprozess der Maschine ist vorzugsweise ein Arbeitsvorgang, während welchem Aktuatoren und/oder Sensoren der Maschine mittels einer Ansteuerung durch den Benutzer oder durch ein Steuerungsalgorithmus eine technische Operation durchführen, um ein bestimmtes Ergebnis zu erzielen. Eine Operation ist beispielsweise ein Bohr-, ein Dreh-, ein Fräs-, ein Hebe-, ein Senk-, ein Schneid-, ein Wasch-, ein Mess-, ein Transport-, ein Saugvorgang und/oder weitere technische Operationen, die von einer Maschine durchgeführt werden können.

Die Applikation kann auch als eine ältere Version der Applikation bezeichnet werden, während die aktualisierte oder veränderte Version der Applikation als eine neuere Version der Applikation bezeichnet werden kann.

Insbesondere wird in dem Schritt des Ausführens der aktualisierten oder veränderten Version der Applikation die Applikation in dem abgesicherten Bereich gestartet. Die aktualisierte oder veränderte Version der Applikation ersetzt insbesondere jedoch nicht sofort die Applikation, sondern wird vorher zuerst in einem nächsten Schritt validiert oder überprüft.

Die Prüfkorrekturdaten umfassen insbesondere Daten, welche als Ergebnis einer Verarbeitung der historischen Prozessdaten durch die aktualisierte oder veränderte Version der Applikation erzeugt werden.

Das Vergleichsergebnis oder das Validierungsergebnis gibt insbesondere an, ob die Prüfkorrekturdaten in einem Rahmen übereinstimmen, welcher zumindest durch die erzeugten Korrekturdaten vorgegeben wird. Unter einem Rahmen kann vorliegend eine Menge von akzeptablen Grenzwerten oder akzeptablen Werten verstanden werden, die bei der Benutzung in der Vergangenheit keine Probleme in dem Automatisierungssystem verursacht haben.

Dies hat den Vorteil, dass dadurch sichergestellt ist, dass die aktualisierte oder veränderte Version der Applikation die gleichen Arbeitsergebnisse wie die Applikation ausgibt und somit zumindest wie die Applikation funktioniert oder arbeitet.

Insbesondere wird in dem Schritt des Vergleichens eine Validierung oder eine Überprüfung durch die Datenverarbeitungseinrichtung durchgeführt, bei der die Prüfkorrekturdaten mit von der Applikation erzeugten Korrekturdaten verglichen werden. Die Schritte des Ausführens und Validierens können auch als Simulationsschritte bezeichnet werden.

Treten bei dem Vergleichen oder Überprüfen oder Validieren keine Probleme auf, also ist das Vergleichsergebnis positiv, wird die Applikation mit der aktualisierten oder veränderten Version der Applikation ausgetauscht. Anschließend wird das Automatisierungssystems mit der aktualisierten oder veränderten Version der Applikation betrieben.

Insbesondere wird nach dem Austauschen die Applikation gestoppt. Die Applikation oder diese ältere Version der Applikation kann beispielsweise für den Fall eines "Desaster Recovery" auf der Datenverarbeitungseinrichtung lokal gespeichert werden.

Im Folgenden sind Beispiele für verschiedene Anwendungsfälle von Automatisierungseinrichtungen und Korrekturdaten aufgeführt.

Wenn beispielsweise die Automatisierungseinrichtung ein Roboter ist und der Aktuator der Automatisierungseinrichtung ein Roboterarm ist, dann werden die durch die Applikation erzeugten Korrekturdaten dazu verwendet, um korrigierte Steuerdaten zu dem Roboterarm zu übertragen, damit dieser insbesondere eine falsche Bewegung außerhalb seines vordefinierten Bewegungsraums beendet. Dies hat den Vorteil, dass die Sicherheit erhöht wird, da sich der Roboterarm (wieder) in seinem vorgegebenen Raum bewegt und dadurch keinem Menschen oder keinen Gegenständen oder sich selbst Schaden zufügen kann.

Wenn beispielsweise die Automatisierungseinrichtung eine Förderanlage ist und der Aktuator der Automatisierungseinrichtung ein Motor eins Förderbandes ist, dann werden die durch die Applikation erzeugten Korrekturdaten dazu verwendet, um korrigierte Steuerdaten zu dem Motor des Förderbandes zu übertragen, damit dieser insbesondere seine Geschwindigkeit korrigiert. Dies hat den Vorteil, dass die Werkstücke oder Produkte, welche über das Förderband übertragen werden, mit der richtigen Geschwindigkeit übertragen werden. Dies erhöht die Sicherheit bei der Produktion.

Wenn beispielsweise die Automatisierungseinrichtung ein Bohrroboter oder eine stationäre Bohrmaschine ist und der Aktuator der Automatisierungseinrichtung ein Bohrer ist, dann werden die durch die Applikation erzeugten Korrekturdaten dazu verwendet, um korrigierte Steuerdaten zu dem Bohrer zu übertragen, damit dieser insbesondere falsche Bohrparameter korrigiert, um in einem Werkstück oder in einem Produkt fehlerhafte Bohrlöcher nicht erneut zu produzieren. Dies hat den Vorteil, dass die Qualität der Produktion, insbesondere der Ausschuss, verringert wird.

Gemäß einer Ausführungsform umfasst die Datenverarbeitungseinrichtung ein Edge-Gerät.

Die Verwendung des Edge-Gerätes als die Datenverarbeitungseinrichtung weist den Vorteil auf, dass das Edge-Gerät im Vergleich, mit beispielsweise speicherprogrammierbaren Steuerungen, Multicore-Prozessoren mit höherer Rechenleistung verwendet, was die Verarbeitungsfähigkeit bei der Verarbeitung von Daten der Datenverarbeitungseinrichtung erhöht.

Das Edge-Gerät ist insbesondere als ein Edge-Controller oder ein Internet-of-Things-Gerät (IoT-Gerät) ausgebildet. Das Edge-Gerät ist insbesondere das vorangestellte Gerät eines IoT-Systems. Es agiert vorzugsweise in erster Linie als Sensorgerät und sammelt Informationen aus der physischen Umgebung oder tritt als Betätigungselement in Erscheinung, das die Außenwelt mit einem Ausgang steuert. Bei dem Edge-Gerät handelt es sich beispielsweise um eine Form einer **speicherprogrammierbaren Steuerung**. Insbesondere ist das Edge-Gerät nicht in Form einer speicherprogrammierbaren Steuerung ausgebildet. In diesem Fall kann die speicherprogrammierbare Steuerung die Sensoren und/oder die Aktuatoren der Automatisierungseinrichtung ansteuern. Dabei ist das Edge-Gerät beispielsweise dazu eingerichtet, mit der speicherprogrammierbaren Steuerung zur Datenübertragung zwischen der speicherprogrammierbaren Steuerung und dem Edge-Gerät zu kommunizieren.

Gemäß einer weiteren Ausführungsform umfasst die Steuereinrichtung ein Feldgerät, insbesondere eine speicherprogrammierbare Steuerung.

Eine Steuereinrichtung ist insbesondere ein Gerät oder ein Prozessor in einem Gerät, das zur **Steuerung** oder **Regelung** einer Maschine, einer Automatisierungseinrichtung oder eines Automatisierungssystems eingesetzt und **programmiert** wird. Die Steuereinrichtung wird insbesondere mittels des Steuerungsalgorithmus betrieben.

Ein Steuerungsparameter ist insbesondere zumindest ein Parameter oder ein Wert, welcher verändert wird, um das Ausgangsergebnis bei einer Ansteuerung einer Automatisierungseinrichtung zu verändern und/oder anzupassen.

Gemäß einer weiteren Ausführungsform ist der abgesicherte Bereich als ein unabhängiger Softwareprozess, als eine Sandbox, als ein Container oder als eine virtuelle Maschine ausgebildet.

Vorteilhaft bei der Ausführung oder eines Startens einer Applikation innerhalb des geschützten Bereiches ist es, dass gewährleistet ist, dass die auf dem Gerät verwendeten Applikationen, sofern sie jeweils unterschiedliche abgesicherte Bereiche aufweisen, strikt voneinander getrennt sind. Eine Applikation innerhalb eines abgesicherten Bereichs hat nie Zugriff auf eine weitere Applikation innerhalb eines weiteren abgesicherten Bereichs. Dies erhöht die Sicherheit bei der Installation, Verarbeitung und Einrichtung von Applikationen.

Der abgesicherte Bereich ist insbesondere ein Bereich, in welchem nur vorbestimmte Applikationen ausgeführt werden dürfen oder der abgesicherte Bereich ist ein unabhängiger Softwareprozess, welcher nicht mit anderen Softwareprozessen oder Algorithmen verbunden ist oder in Abhängigkeit dazu steht. Gemäß einer weiteren Ausführungsform umfasst das Verfahren ferner:
Ausführen der Applikation zum Erzeugen von Korrekturdaten mit Hilfe der Datenverarbeitungseinrichtung, insbesondere in dem abgesicherten Bereich oder in einem weiteren abgesicherten Bereich.

Bei einer Ausführung der aktualisierten oder veränderten Version der Applikation in dem abgesicherten Bereich und dem Ausführen der Applikation in einem weiteren abgesicherten Bereich erhöht sich in vorteilhafter Weise die Sicherheit bei der Datenverarbeitung in dem Automatisierungssystem, insbesondere in der Datenverarbeitungseinrichtung, da jede Applikation jeweils in einem anderen abgesicherten Bereich betrieben wird und keine Applikation Zugriff auf die andere hat.

Gemäß einer weiteren Ausführungsform werden die aktualisierte oder veränderte Version der Applikation und die Applikation gleichzeitig ausgeführt.

Somit kann in vorteilhafterweise während des Betriebes der Applikation, die aktualisierte oder veränderte Version der Applikation gestartet und überprüft werden und anschließend bei einer erfolgreichen Überprüfung der Austausch der Applikation mit der veränderten Version der Applikation und die Applikation ausgeführt werden. Infolgedessen ist es nicht erforderlich, dass der laufende Betrieb des Automatisierungssystems unterbrochen wird, was wiederrum die Kontinuität bei dem Betrieb der Automatisierungseinrichtung gewährleistet.

Ein gleichzeitiges Ausführen kann auch als ein paralleles oder als ein simultanes Ausführen der aktualisierten oder veränderten Version der Applikation und der Applikation oder als ein Ausführen der aktualisierten oder veränderten Version der Applikation und der Applikation in zeitlicher Übereinstimmung zueinander, definiert werden.

Gemäß einer weiteren Ausführungsform umfasst das Verfahren ferner:
Herunterladen, der aktualisierten oder veränderten Version der Applikation von einem Cloud-Server auf die Datenverarbeitungseinrichtung.

Der Cloud-Server ist insbesondere als eine Siemens Mindsphere ausgebildet. Andere Cloud-Server sind insbesondere auch verwendbar.

Gemäß einer weiteren Ausführungsform umfasst das Verfahren ferner:
Erzeugen der aktualisierten oder veränderten Version der Applikation auf dem Cloud-Server mit Hilfe historischer Prozessdaten unter Anwendung eines Algorithmus zum Maschinellen Lernen.

Dadurch, dass in die Erzeugung der aktualisierten oder veränderten Version der Applikation historische Prozessdaten miteingehen und dass ein Algorithmus zum Maschinellen Lernen auf diese historische Prozessdaten angewendet wird, weist insbesondere die aktualisierte oder veränderte Version der Applikation verbesserte Korrekturdaten (Prüfkorrekturdaten) auf, welche zur Ansteuerung der Automatisierungseinrichtung verwendet werden. Dadurch werden in vorteilhafter Weise Fehler, welche in der Applikation noch vorhanden waren, in der aktualisierten oder veränderten Version der Applikation verhindert, unterbunden und/oder korrigiert. Dies erhöht die Qualität bei der Fertigung eines Produktes und/oder eines Werkstückes.

Maschinelles Lernen beschreibt insbesondere den Vorgang der Wissensgenerierung aus Erfahrung. Ein System lernt hierbei vorzugsweise aus Beispielen und kann diese nach Beendigung der Lernphase verallgemeinern. Beispiele für Algorithmen zum Maschinellen Lernen sind insbesondere überwachtes Lernen und unüberwachtes Lernen.

Gemäß einer weiteren Ausführungsform weist das Automatisierungssystem, die Automatisierungseinrichtung, die Steuereinrichtung und Sensoreinrichtungen mit jeweils Ein- und/oder Ausgabeanschlüssen für Sensor- und/oder Steuerdaten auf, und die Prozessdaten zumindest eine Auswahl der an den Ein- und Ausgangsanschlüssen abgreifbaren Sensordaten umfassen. Solche Anschlüsse können als Steckverbinder, beispielsweise drahtgebunden, aber auch als Drahtlosschnittstelle implementiert sein.

Sensordaten sind insbesondere Daten, welche von Sensoren der zumindest einen Automatisierungseinrichtung oder zumindest einer weiteren Automatisierungseinrichtung des Automatisierungssystems bereitgestellt werden. Auch können mittels eines Sensors alle Sensordaten bereitgestellt werden. Sensordaten können auch von mehreren Automatisierungseinrichtungen bereitgestellt werden.

Steuerdaten sind vorzugsweise Daten, welche zur Ansteuerung eines Aktuators einer Automatisierungseinrichtung dienen. Mittels der Steuerdaten können auch mehrere Aktuatoren einer Automatisierungseinrichtung angesteuert werden. Auch können Aktuatoren oder ein Aktuator von mehrere Automatisierungseinrichtungen angesteuert werden.

Gemäß einer weiteren Ausführungsform umfasst das Verfahren ferner:
Speichern der während eines Betriebes des Automatisierungssystems erzeugten Prozessdaten als die historischen Prozessdaten.

Dies hat den Vorteil, dass die historischen Prozessdaten insbesondere aus aktuellen, während des Betriebes des Automatisierungssystems erzeugten Prozessdaten, gebildet werden. Dadurch weisen die historischen Prozessdaten aktuelle Prozessdaten auf, welche wiederrum zur Erzeugung der aktualisierten oder veränderten Version der Applikation verwendet werden. Somit werden insbesondere in vorteilhafter Weise Fehler, welche in der Applikation noch vorhanden waren, in der aktualisierten oder veränderten Version der Applikation verhindert, unterbunden und/oder korrigiert. Dies erhöht die Qualität bei der Fertigung eines Produktes und/oder eines Werkstückes.

Gemäß einer weiteren Ausführungsform werden die historischen Prozessdaten mit Hilfe eines SCADA-Servers oder eines lokalen Datenpuffers der Steuereinrichtung oder der Datenverarbeitungseinrichtung gespeichert.

Durch die verschiedenen Arten der Speicherung ist es in vorteilhafter Weise möglich, auf historische Prozessdaten zuzugreifen, welche zu verschiedenen bestimmten Zeitpunkten gespeichert wurden. Damit ist es möglich, die aktualisierte oder veränderte Version der Applikation mittels zu verschiedener bestimmter Zeitpunkte gespeicherten historischen Prozessdaten zu erzeugen. Damit erhöht sich die Qualität sowie die Flexibilität bei der Fertigung eines Produktes und/oder eines Werkstückes, da bestimmte Fehler, die durch historische Prozessdaten aufgetreten sind, welche zu einem bestimmten Zeitpunkt gespeichert wurden, in einfacher Art und Weise korrigiert werden können, indem historische Prozessdaten zur Erzeugung der aktualisierten oder veränderten Version der Applikation zu einem anderen bestimmten Zeitpunkt verwendet werden können, an dem der bestimmte Fehler noch nicht aufgetreten ist.

Insbesondere sind historische Prozessdaten, welche mit Hilfe eines SCADA-Servers abgespeichert werden, einen Tag alt, mehrere Tage alt, einen Monat alt und/oder älter.

Vorzugsweise sind historische Prozessdaten, welche mit Hilfe eines lokalen Datenpuffers der Steuereinrichtung oder der Datenverarbeitungseinrichtung abgespeichert werden, eine Sekunde alt, mehrere Sekunden alt, eine Minute alt und/oder mehrere Minuten alt und werden während des Betriebes des Automatisierungssystems erhalten und abgespeichert.

Gemäß einer weiteren Ausführungsform umfasst das Verfahren, insbesondere nach dem Vergleichen der Korrekturdaten mit den Prüfkorrekturdaten, ferner:
Ausführen der Applikation mit einem ersten Teil von aktuellen Prozessdaten zum Erzeugen aktueller Korrekturdaten;
Ausführen der aktualisierten oder veränderten Applikation mit einem zweiten Teil der aktuellen Prozessdaten zum Erzeugen aktueller Prüfkorrekturdaten; und
Anpassen der Steuerungsparameter und/oder des Steuerungsalgorithmus gemäß der jeweils aktuellen Korrekturdaten beziehungsweise Prüfkorrekturdaten.

Gemäß einer weiteren Ausführungsform wird schrittweise, insbesondere in vorgebbaren Zeitschritten, der erste Teil der aktuellen Prozessdaten verringert und der zweite Teil von aktuellen Prozessdaten vergrößert.

Gemäß einer weiteren Ausführungsform umfasst das Verfahren ferner:
Erfassen mindestens eines Leistungsparameters der gesteuerten Automatisierungseinrichtung; und
Vergleichen des erfassten Leistungsparameters während der Verwendung des ersten Teils und des zweiten Teils der aktuellen Prozessdaten.

Durch das Ausführen der Applikation mit einem ersten Teil von aktuellen Prozessdaten und das Ausführen der aktualisierten oder veränderten Applikation mit einem zweiten Teil der aktuellen Prozessdaten sowie dem schrittweisen, insbesondere in vorgebbaren Zeitschritten, Verringern des ersten Teils der aktuellen Prozessdaten und dem Vergrößern des zweiten Teils von aktuellen Prozessdaten wird insbesondere ein schrittweises Austauschen der Applikation mit der aktualisierten oder veränderten Version der Applikation durchgeführt.

Das Austauschen wird vorzugsweise in vergebbaren Zeitschritten durchgeführt, wobei in jeder Aktualisierungsstufe oder Austauschstufe die aktualisierte oder veränderte Version der Applikation in Abhängigkeit eines Leistungsparameters validiert wird. Bei der Validierung oder bei dem Vergleichen wird überprüft, ob bei jeder jeweiligen Austauschstufe der aktualisierten oder veränderten Version der Applikation die durch die Verarbeitung jeweils erzeugten Prüfkorrekturdaten innerhalb des oder der Leistungsparameter liegen.

Dies hat den technischen Effekt, dass noch bevor die Applikation als Ganzes durch die aktualisierte oder veränderte Version der Applikation ausgetauscht oder ersetzt wird, schrittweise geprüft wird, ob die aktualisierte oder veränderte Version der Applikation unter Belastung aktuelle Prüfkorrekturdaten erzeugt, welche mit den von der Applikation erzeugten aktuellen Korrekturdaten übereinstimmen und ob die aktuellen Prüfkorrekturdaten innerhalb des Leistungsparameters liegen. Dadurch wird in vorteilhafterweise sichergestellt, dass die aktualisierte oder veränderte Version der Applikation auch unter Belastung fehlerfrei arbeitet und ausgeführt wird. Infolgedessen wird die Performance des Automatisierungssystems erhöht, der Wartungsaufwand verringert, während gleichzeitig die Stabilität des Betriebes des Automatisierungssystems erhöht wird.

Insbesondere kann bei dem Austauschen der Applikation mit der aktualisierten oder veränderten Version der Applikation auch von einem Hochfahren der aktualisierten oder veränderten Version der Applikation gesprochen werden.

Das Ausführen der Applikation mit einem ersten Teil von aktuellen Prozessdaten zum Erzeugen aktueller Korrekturdaten und das Ausführen der aktualisierten oder veränderten Applikation mit einem zweiten Teil der aktuellen Prozessdaten zum Erzeugen aktueller Prüfkorrekturdaten wird vorzugsweise simultan, parallel und/oder gleichzeitig durchgeführt.

Beispielsweise wird die Steuereinrichtung für die Dauer von einer Minute mit dem ersten Teil von aktuellen Prozessdaten und dem zweiten Teil von aktuellen Prozessdaten versorgt. Ein bestimmter vorggebarer Zeitschritt ist beispielsweise 10 Sekunden. Dies bedeutet insbesondere, dass die Steuereinrichtung innerhalb dieser einen Minute für die Dauer von 10 Sekunden mit dem zweiten Teil von aktuellen Prozessdaten versorgt wird, während die Steuereinrichtung innerhalb dieser einen Minute für die Dauer von 50 Sekunden mit dem ersten Teil von aktuellen Prozessdaten versorgt wird. Nach dieser einen Minute wird validiert, ob die aktuellen Prüfkorrekturdaten, welche innerhalb der 10 Sekunden von der aktualisierten oder veränderten Applikation erzeugt werden, innerhalb des Leistungsparameters liegen.

Wenn die erzeugten aktuellen Prüfkorrekturdaten innerhalb des Leistungsparameters liegen, wird der erste Teil von aktuellen Prozessdaten verringert, auf beispielsweise 40 Sekunden und der zweiten Teil von aktuellen Prozessdaten auf 20 Sekunden vergrößert. Dann wird erneut nach einer Minute validiert, ob die aktuellen Prüfkorrekturdaten, welche innerhalb der 20 Sekunden von der aktualisierten oder veränderten Applikation erzeugt werden, innerhalb des Leistungsparameters liegen. Wenn die erzeugten aktuellen Prüfkorrekturdaten innerhalb des Leistungsparameters liegen, wird der erste Teil von aktuellen Prozessdaten verringert, auf beispielsweise 30 Sekunden und der zweiten Teil von aktuellen Prozessdaten auf 30 Sekunden vergrößert. Nun wird erneut die Validierung durchgeführt.

Erst wenn die aktualisierte oder veränderte Applikation erfolgreich insbesondere mindestens 50% der Zeit gelaufen ist, werden zwischen der Applikation und der Steuereinrichtung keine Teile von Prozessdaten mehr übertragen. Anschließend wird in diesem Fall die Applikation beendet.

Sollte es während dieses Hochfahrens oder des Austauschens zu Problemen kommen, werden die aktuellen Prozessdaten des zweiten Teils als auch das detektierte Problem, wie beispielsweise keine Einhaltung des Leistungsparameters, an den Cloud-Server gemeldet, um den Algorithmus für das Maschinelle Lernen zu trainieren, damit eine neuere aktuellere Version der aktualisierten oder veränderten Applikation erzeugt wird, in welchem dieses detektierte Problem im besten Fall korrigiert wird.

Die vorgebbaren Zeitschritte können beliebig unterteilt werden. Beispielsweise in 10-Sekunden Schritte: 10, 20, 30, 40, 50, 60 Sekunden. Auch sind die vorgebbaren Zeitschritte in 5-Sekunden Schritte unterteilbar: 5, 10, 15, 20, 25 Sekunden etc., oder in vorgebbare Zeitschritte, welche hinsichtlich mehrerer Minuten unterschiedlich sind. Kleinere und größere vorgebbare Zeitschritte sind hierbei auch denkbar.

Der Leistungsparameter ist insbesondere ein sog. "Key-Performance-Indikator", welcher ein Maß eines Ausschusses oder eine Qualität bei einer Fertigung eines Produktes oder Werkstückes angibt. Beispielsweise kann durch den Leistungsparameter oder die Leistungsparameter festgelegt werden, wieviel Ausschuss bei einer Produktion eines Produktes und/oder eines Werkstückes anfallen dürfen. Wenn hierbei die Automatisierungseinrichtung den zweiten Teil von aktuellen Prozessdaten für die Dauer von 20 Sekunden an die aktualisierte oder veränderte Applikation überträgt, und die aktualisierte oder veränderte Applikation basierend auf diesen aktuellen Prozessdaten die aktuellen Prüfkorrekturdaten erzeugt, wird validiert, ob der Ausschuss, der als Ergebnis der Verarbeitung der aktuellen Prüfkorrekturdaten durch die Automatisierungseinrichtung erzeugt wird, noch innerhalb des Leistungsparameters liegt. Erst wenn die Validierung erfolgreich ist, also der Ausschuss insbesondere unter dem Leistungsparameter liegt, wird der zweite Teil von aktuellen Prozessdaten vergrößert. Die Qualität bei einer Fertigung des Produktes und/oder des Werkstückes kann ein Maß dafür sein, welche Abweichungswerte beispielsweise noch bei einem Bohrloch erlaubt sind und bei welchen Überschreitungen dieser Abweichungswerte oder des Abweichungswertes es zu Problemen in der Fertigung kommen kann. Somit kann durch das schrittweise Überführen der aktuellen Prozessdaten von dem ersten Teil in den zweiten Teil, überprüft werden, ob bei jeder Austauschstufe der Abweichungswert bei Verwendung der aktualisierten oder veränderten Applikation überschritten wird oder nicht.

Insbesondere kann, anstatt den Steuerungsalgorithmus automatisch über die aktualisierte oder veränderte Applikation zu optimieren, eine Optimierung auch durch einen Benutzer oder Operator erfolgen. Dabei werden dem Operator auf einem Bedien- und Beobachtungspanel die vorgeschlagenen Änderungen, wie beispielsweise eine Korrektur eines Bohrlochs, angezeigt. Somit kann anschließend der Operator als Experte überprüfen, ob die vorgeschlagene Änderung aus seiner Sicht akzeptabel ist. Dann kann er diese Änderung mit einer Aktion, beispielsweise durch ein Klicken eines Buttons des Bedien- und Beobachtungspanels, übernehmen.

Gemäß einer weiteren Ausführungsform werden die Schritte des Ausführens und des Vergleichens in einer Digitalen-Zwilling-Umgebung realisiert.

Unter Nutzung erweiterter Simulationsprodukte, wie beispielsweise PLCSim, kann die aktualisierte oder veränderte Applikation in einer Art "Digitalen-Zwilling-Umgebung" getestet werden. Dies hat den Vorteil, dass die Ergebnisse der Prozessdatensimulation noch realitätsnäher sind und es kann weiterhin auf einige der vorgebbaren bestimmten Zeitschritte oder Austauschstufen beim Austauschen und/oder Hochfahren der aktualisierten oder veränderten Applikation verzichtet werden.

Gemäß einem zweiten Aspekt wird ein Computerprogrammprodukt vorgeschlagen, welches auf einer programmgesteuerten Einrichtung, insbesondere auf einer einem Automatisierungssystem zugeordneten Datenverarbeitungseinrichtung, die Durchführung des Verfahrens gemäß dem ersten Aspekt veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine Steuereinrichtung für ein Automatisierungssystem mit zumindest einer Automatisierungseinrichtung und einer Datenverarbeitungseinrichtung vorgeschlagen. Die Steuereinrichtung ist eingerichtet, einen Steuerungsalgorithmus zum Erzeugen von Steuerdaten für die Automatisierungseinrichtung in Abhängigkeit von Sensordaten auszuführen, wobei der Steuerungsalgorithmus durch Steuerungsparameter anpassbar ist, und die
Datenverarbeitungseinrichtung zum Ausführen einer in der Art einer Applikation implementierten Software, welche in Abhängigkeit von den Sensor- und Steuerdaten Korrekturdaten zur Anpassung des Steuerungsalgorithmus erzeugt, eingerichtet ist;
wobei die Datenverarbeitungseinrichtung ferner eingerichtet ist:
   zum Ausführen einer aktualisierten oder veränderten Version der Applikation in einem abgesicherten Bereich der Datenverarbeitungseinrichtung mit historischen Prozessdaten zum Erzeugen von Prüfkorrekturdaten;
   zum Vergleichen der Prüfkorrekturdaten mit von der Applikation erzeugten Korrekturdaten, welche mit Hilfe der Applikation aus den historischen Prozessdaten erzeugt wurden, und
   zum Austauschen der Applikation mit der aktualisierten oder veränderten Version der Applikation in Abhängigkeit von dem Vergleichsergebnis.

Gemäß einer Ausführungsform des dritten Aspekts ist die Steuereinrichtung und/oder die Datenverarbeitungseinrichtung eingerichtet, ein Verfahren gemäß dem ersten Aspekt durchzuführen.

Gemäß einem vierten Aspekt wird ein Automatisierungssystem mit einer Steuereinrichtung gemäß des dritten Aspekts oder einer Ausführungsform des dritten Aspekts vorgeschlagen.

Die für das vorgeschlagene Verfahren beschriebenen Ausführungsformen und Merkmale gelten für die vorgeschlagene Einrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagram eines Ausführungsbeispiels eines Verfahrens zum Aktualisieren von Software für ein Automatisierungssystem;
- Fig. 2: zeigt ein schematisches Blockdiagramm eines Ausführungsbeispiels eines Automatisierungssystems umfassend eine Steuereinrichtung, eine Datenverarbeitungseinrichtung und eine Automatisierungseinrichtung;
- Fig. 3 bis Fig. 7: zeigen mittels mehrerer schematischer Blockdiagramme eine detaillierte Darstellung des Verfahrens der Fig. 1; und
- Fig. 8: zeigt ein schematisches Blockdiagramm eines weiteren Ausführungsbeispiels eines Automatisierungssystems umfassend eine Steuereinrichtung, eine Datenverarbeitungseinrichtung und eine Automatisierungseinrichtung.

In den Figuren sind gleiche oder funktionsgleiche Elemente mit denselben Bezugszeichen versehen worden, sofern nichts anderes angegeben ist.

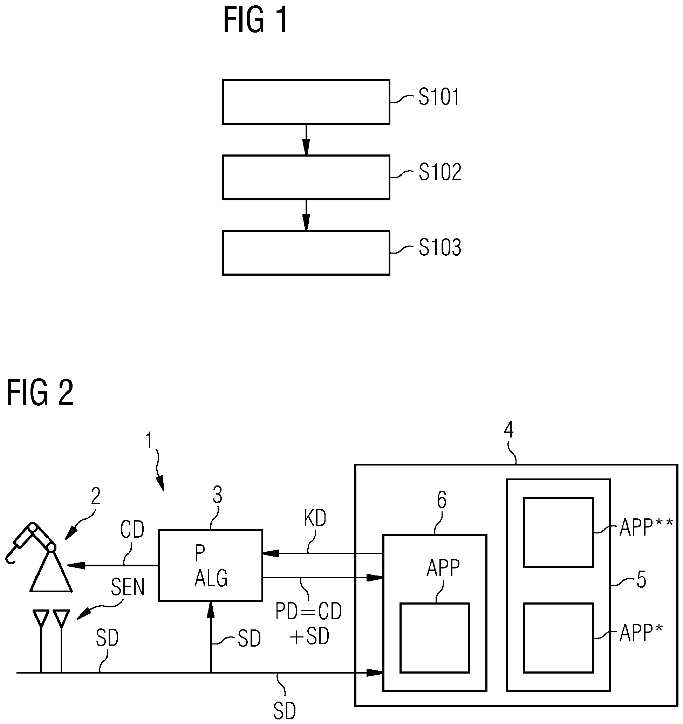

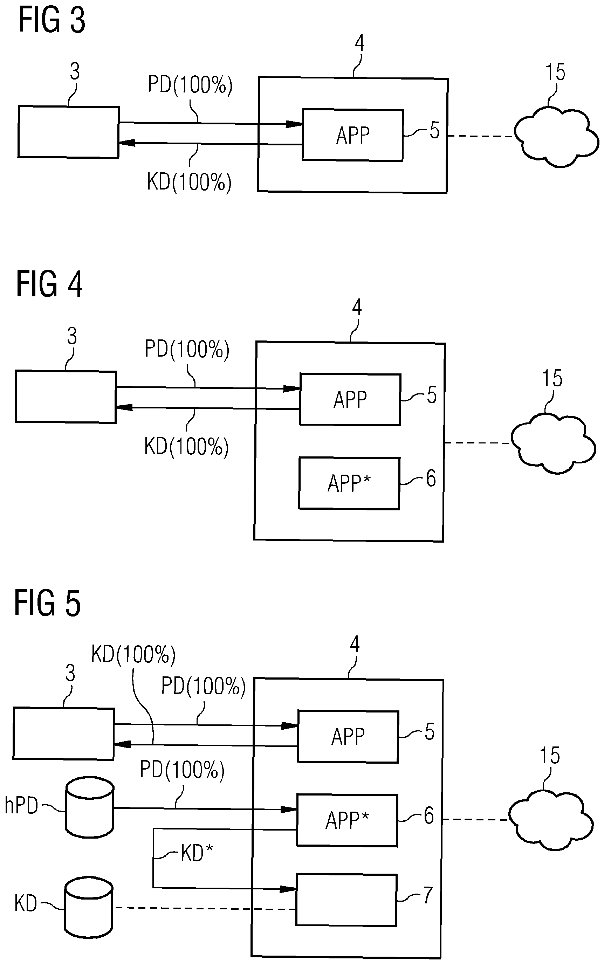

Anhand der Fig. 1 bis Fig. 7 wird ein Ausführungsbeispiel des Verfahrens zum Aktualisieren von Software für ein Automatisierungssystem 1 beschrieben. Dies umfasst die Verfahrensschritte gemäß Fig. 1, das Automatisierungssystem 1 gemäß Fig. 2 sowie eine detailliertere Darstellung der Verfahrensschritte der Fig. 1 unter Verwendung der Fig. 3 bis Fig. 7.

Fig. 2 zeigt ein schematisches Blockdiagramm eines Ausführungsbeispiels eines Automatisierungssystem 1, bei welchem zumindest Teile des Automatisierungssystems 1 mittels einer Software wie einer Applikation APP betrieben werden. Das Automatisierungssystem 1 umfasst eine Automatisierungseinrichtung 2, eine Steuereinrichtung 3 und eine Datenverarbeitungseinrichtung 4.

Die Automatisierungseinrichtung 2 wird mit Hilfe von der in Abhängigkeit von einem Steuerungsalgorithmus ALG betriebenen Steuereinrichtung 3 angesteuert. Der Steuerungsalgorithmus ALG ist insbesondere durch zumindest einen Steuerungsparameter P anpassbar.

Die Steuereinrichtung 3 ist dazu eingerichtet, in Abhängigkeit von Sensordaten SD Steuerdaten CD für die Automatisierungseinrichtung 2 zu erzeugen. Mittels dieser Steuerdaten CD wird die Automatisierungseinrichtung 2 angesteuert, wie in Fig. 2 dargestellt ist. In einer Ausführungsform umfasst die Steuereinrichtung 3 ein Feldgerät FG, insbesondere eine speicherprogrammierbare Steuerung SPS. Die Sensordaten SD in Fig. 2 werden von Sensoren SEN innerhalb des Automatisierungssystems 1 erhalten und an die Steuereinrichtung 3 und an die Applikation APP weitergeleitet. In einer Ausführungsform weisen das Automatisierungssystem 1, die Automatisierungseinrichtung 2 und die Steuereinrichtung 3 Sensoreinrichtungen mit jeweils Ein- und/oder Ausgabeanschlüssen für Sensor- und/oder Steuerdaten SD, CD auf.

Die Datenverarbeitungseinrichtung 4 umfasst in der Fig. 2 ein Edge-Gerät. Die Datenverarbeitungseinrichtung 4 in Fig. 2 ist zum Ausführen einer in der Art einer Applikation APP implementierten Software, welche in Abhängigkeit von den Sensor- und Steuerdaten (Prozessdaten) (PD=SD+CD) Korrekturdaten KD zur Anpassung des Steuerungsalgorithmus ALG erzeugt, eingerichtet. Die Prozessdaten PD umfassen hierbei zumindest eine Auswahl von Sensordaten SD.

Wie in Fig. 2 dargestellt, werden zwischen der Datenverarbeitungseinrichtung 4 und der Steuereinrichtung 3 Korrekturdaten KD sowie Prozessdaten PD ausgetauscht. Die Applikation APP wird innerhalb eines weiteren abgesicherten Bereichs 6 der Datenverarbeitungseinrichtung 4 ausgeführt, während eine aktualisierte oder veränderte Version der Applikation APP* innerhalb eines abgesicherten Bereichs 5 ausgeführt wird. Auch kann die Applikation APP innerhalb des abgesicherten Bereichs 5 ausgeführt werden, während die aktualisierte oder veränderte Version der Applikation APP* in dem weiteren abgesicherten Bereich 6 ausgeführt wird. Zusätzlich kann, wie in Fig. 2 dargestellt ist, eine aktualisierte oder veränderte Version der Applikation APP* APP** in dem abgesicherten Bereich 5, beispielsweise für eine weitere Aktualisierung, zur Verfügung stehen.

Fig. 1 zeigt ein schematisches Ablaufdiagram eines Ausführungsbeispiels eines Verfahrens zum Aktualisieren von Software für das Automatisierungssystem 1 nach Fig. 2. Das Verfahren umfasst die Verfahrensschritte S101, S102 und S103.

Die Datenverarbeitungseinrichtung 4 aus Fig. 2 ist ferner dazu eingerichtet, die Verfahrensschritte S101, S102 und S103 der Fig. 1 durchzuführen.

Insbesondere werden die Verfahrensschritte S101, S102 und S103 der Fig. 1 mit Hilfe der mehreren schematischen Blockdiagramme der Fig. 3 bis Fig. 7 detaillierter beschrieben.

Fig. 3 zeigt eine Ausgangssituation des Verfahrens zum Aktualisieren von Software für das Automatisierungssystem 1. Hierbei ist die Applikation APP innerhalb des gesicherten Bereichs 5 der Datenverarbeitungseinrichtung 4 angeordnet. Zwischen der Steuereinrichtung 3 und der Applikation 5 werden Prozessdaten PD und Korrekturdaten KD ausgetauscht. Ferner ist die Datenverarbeitungseinrichtung 4 mit einem Cloud-Server 15 verbunden.

In dem Schritt S101 der Fig. 1 wird eine aktualisierte oder veränderte Version der Applikation APP* in dem abgesicherten Bereich 5 einer Datenverarbeitungseinrichtung 4 mit historischen Prozessdaten hPD (siehe Fig. 5) zum Erzeugen von Prüfkorrekturdaten KD* (siehe Fig. 5) ausgeführt. Dies kann auch als ein Starten oder ein Hochfahren der aktualisierten oder veränderten Version der Applikation APP* bezeichnet werden.

Die während eines Betriebes des Automatisierungssystems 1 erzeugten Prozessdaten PD werden in der Ausführungsform der Fig. 1 bis Fig. 7 als die historischen Prozessdaten hPD abgespeichert. Diese Speicherung erfolgt insbesondere mit Hilfe eines SCADA-Servers oder eines lokalen Datenpuffers der Steuereinrichtung 3 oder der Datenverarbeitungseinrichtung 4.

Damit die aktualisierte oder veränderte Version der Applikation APP* ausgeführt werden kann, wird diese in einem vorherigen Schritt von dem Cloud-Server 15 auf die Datenverarbeitungseinrichtung 4 heruntergeladen. Der Schritt S101 ist insbesondere durch die Fig. 4 und 5 abgebildet. In einer Ausführungsform ist der abgesicherte Bereich 5 als ein unabhängiger Softwareprozess, als eine Sandbox, als ein Container oder als eine virtuelle Maschine ausgebildet.

In einer Ausführungsform wird die aktualisierte oder veränderte Version der Applikation APP* auf dem Cloud-Server 15 mit Hilfe historischer Prozessdaten hPD unter Anwendung eines Algorithmus zum Maschinellen Lernen erzeugt und anschließend auf die Datenverarbeitungseinrichtung 4 heruntergeladen.

In einer weiteren Ausführungsform wird die Applikation APP zum Erzeugen von Korrekturdaten KD ebenfalls in dem abgesicherten Bereich 5 oder in einem weiteren abgesicherten Bereich 6 mit Hilfe der Datenverarbeitungseinrichtung 4 ausgeführt, wie in Fig. 2 dargestellt ist. In dem Ausführungsbeispiel der Fig. 1 und der Fig. 2 werden die aktualisierte oder veränderte Version der Applikation APP* und die Applikation APP gleichzeitig ausgeführt.

In einem nächsten Schritt S102 der Fig. 1 werden die erzeugten Prüfkorrekturdaten KD* mit von der Applikation APP erzeugten Korrekturdaten KD, welche mit Hilfe der Applikation APP aus den historischen Prozessdaten hPD erzeugt wurden, verglichen, um ein Vergleichsergebnis zu erzeugen (siehe Fig. 5). Dieses Vergleichsergebnis wird insbesondere durch eine Vergleichs-Einheit 7 in Fig. 5 erhalten.

In einem nächsten Schritt S103 der Fig. 1 wird die Applikation APP mit der aktualisierten oder veränderten Version der Applikation APP* in Abhängigkeit von dem Vergleichsergebnis schrittweise ausgetauscht.

Dieser Schritt S103 des Austauschens ist in spezielle Teilschritte unterteilt, welche anhand der Fig. 5 bis Fig. 7 im Folgenden erläutert werden. Insbesondere wird erst wenn der Austausch vollständig durchgeführt wurde, das Automatisierungssystems 1 mit der aktualisierten oder veränderten Version der Applikation APP* betrieben.

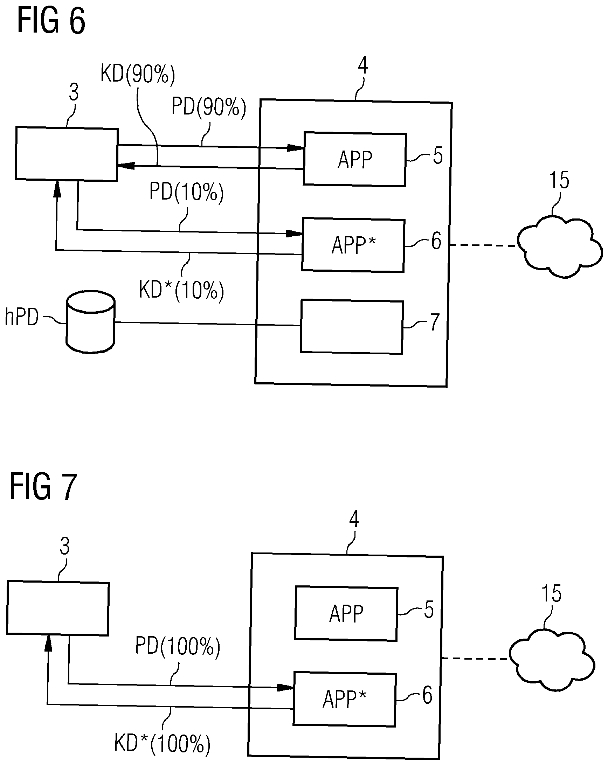

In Fig. 6 wird zu Beginn des Austauschens und insbesondere nach dem Vergleichen der erzeugten Korrekturdaten KD mit den erzeugten Prüfkorrekturdaten KD* die Applikation App mit einem ersten Teil von aktuellen Prozessdaten PD zum Erzeugen aktueller Korrekturdaten KD ausgeführt. Dies ist dadurch gekennzeichnet, dass in Fig. 6 jeweils 90% der aktuellen Prozessdaten PD und der aktuellen Korrekturdaten KD zwischen der Steuereinrichtung 3 und der Applikation APP übertragen werden.

Zusätzlich wird die aktualisierte oder veränderte Applikation APP* mit einem zweiten Teil der aktuellen Prozessdaten PD zum Erzeugen aktueller Prüfkorrekturdaten KD* ausgeführt. Dies ist dadurch gekennzeichnet, dass in Fig. 6 jeweils 10% der aktuellen Prozessdaten PD und der aktuellen Prüfkorrekturdaten KD* zwischen der Steuereinrichtung 3 und der aktualisierten oder veränderten Applikation APP* übertragen werden.

Da die aktuellen Prozessdaten PD in einen ersten und in einen zweiten Teil unterteilt sind und zwischen der Steuereinrichtung 3 und der Applikation APP und der aktualisierten oder veränderten Applikation APP* übertragen werden, wird somit auch der Steuerungsparameter P und/oder der Steuerungsalgorithmus ALG gemäß der jeweils aktuellen Korrekturdaten KD beziehungsweise aktuellen Prüfkorrekturdaten KD* angepasst.

Während des gleichzeitigen Betriebs der Applikation APP und der aktualisierten oder veränderten Applikation APP* werden schrittweise, insbesondere in vorgebbaren Zeitschritten, der erste Teil der aktuellen Prozessdaten PD verringert und der zweite Teil von aktuellen Prozessdaten PD vergrößert.

Dies bedeutet, dass wenn die Steuereinrichtung 3 beispielswiese 100 Sekunden zum Ansteuern der Automatisierungseinrichtung 2 betrieben wird, der erste Teil der aktuellen Prozessdaten PD und der aktuellen Korrekturdaten KD 90 Sekunden zwischen der Applikation APP und der Steuereinrichtung 3 übertragen wird, während der zweite Teil der aktuellen Prozessdaten PD und der aktuellen Prüfkorrekturdaten KD* 10 Sekunden zwischen der aktualisierten oder veränderten Applikation APP* und der Steuereinrichtung 3 übertragen wird. Nachdem die 100 Sekunden verstrichen sind und somit der zweite Teil 10 Sekunden übertragen wurde, wird abschließend anhand eines erfassten Leistungsparameters der gesteuerten Automatisierungseinrichtung 2 verglichen, ob die erzeugten aktuellen Prüfkorrekturdaten KD* innerhalb des Leistungsparameters liegen. Ist dies der Fall, wird für die Dauer von 10 Sekunden die Automatisierungseinrichtung 2 durch die aktualisierte oder veränderte Applikation APP* korrekt angesteuert. Dies bedeutet, dass die aktualisierte oder veränderte Applikation APP* korrekt arbeitet und die gewünschten Ergebnisse für die Dauer von 10 Sekunden liefert.

Infolgedessen wird der erste Teil von aktuellen Prozessdaten PD verringert und der zweite Teil von aktuellen Prozessdaten PD erhöht. Beispielsweise wird der erste Teil nun 80 Sekunden ausgeführt, während der zweite Teil 20 Sekunden ausgeführt wird. Anschließend wird erneut verglichen, ob die erzeugten aktuellen Prüfkorrekturdaten KD* auf Basis des 20 Sekunden Betriebs der Automatisierungseinrichtung 2 mit der aktualisierten oder veränderten Applikation APP* innerhalb des Leistungsparameters liegen. Ist dies der Fall, wird für die Dauer von 20 Sekunden die Automatisierungseinrichtung 2 durch die aktualisierte oder veränderte Applikation APP* beziehungsweise durch deren Prüfkorrekturdaten KD* korrekt angesteuert.

Diese Prozedur wird insbesondere solange durchgeführt, bis der zweite Teil von aktuellen Prozessdaten PD zumindest 50% der beispielsweise 100 Sekunden korrekt ausgeführt wurde bzw. ob die durch die aktuellen Prozessdaten PD des zweiten Teils erzeugten Prüfkorrekturdaten KD* innerhalb der oder des Leistungsparameters liegen.

Vorzugsweise wird erst dann die Applikation APP durch die aktualisierte oder veränderte Applikation APP* ersetzt und das Automatisierungssystem 1 wird mit der aktualisierten oder veränderten Version der Applikation APP* betrieben. Dies ist dargestellt in Fig. 7.

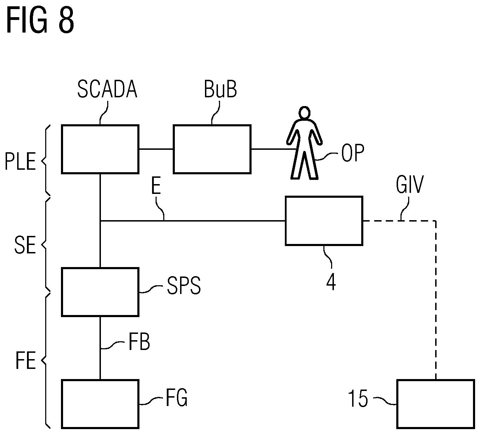

Fig. 8 zeigt ein schematisches Blockdiagramm eines weiteren Ausführungsbeispiels eines Automatisierungssystems 1 umfassend eine Steuereinrichtung 3, eine Datenverarbeitungseinrichtung 4 und eine Automatisierungseinrichtung 2.

Hierbei ist das Automatisierungssystem 1 in unterschiedliche Ebenen unterteilt, in welchen bestimmte Einrichtungen angeordnet sind und/oder verwendet werden.

In der Prozessleitebene PLE ist der SCADA-Server oder das SCADA-System angeordnet. Der SCADA-Server ist mit einem Bedien- und Beobachtungspanel BuB verbunden, welches von einem Operator OP oder Benutzer verwendbar ist.

Die Prozessleitebene PLE ist beispielsweise in Fig. 3 über eine Ethernetverbindung E mit der Steuerungsebene SE verbunden. In der Steuerungsebene SE ist die Datenverarbeitungseinrichtung 4 als ein Edge-Gerät und die Steuereinrichtung 3 als eine speicherprogrammierbare Steuerung SPS ausgebildet. Das Edge-Gerät und die speicherprogrammierbare Steuerung SPS sind über die Ethernetverbindung mit dem SCADA-Server verbunden. Zudem ist das Edge-Gerät mit einem Cloud-Server 15 über eine gesicherte Internetverbindung GIV verbunden. Der Cloud-Server 15 ist in Fig. 3 insbesondere eine SIEMENS Mindsphere. Vorzugsweise wird mittels des Betriebssystems des Edge-Gerätes, also über die Edge-Firmware, der Aktualisierungsvorgang gemäß Fig. 1 der Applikation APP mit der aktualisierten oder veränderten Version der Applikation APP* durchgeführt.

Die speicherprogrammierbare Steuerung SPS bzw. die Steuereinrichtung 3 bildet die Verbindung von der Steuerungsebene SE zu der Feldebene FE. Durch die Steuereinrichtung SE kann zumindest ein Feldgerät FG angesteuert werden. Ein Feldgerät FG ist insbesondere eine Automatisierungseinrichtung 2.

## Patentansprüche

1. Verfahren zum Aktualisieren von Software für ein Automatisierungssystem (1), in dem zumindest eine Automatisierungseinrichtung (2) mit Hilfe von einer in Abhängigkeit von einem Steuerungsalgorithmus (ALG) betriebenen Steuereinrichtung (3) gesteuert ist, wobei der Steuerungsalgorithmus (ALG) durch Steuerungsparameter (P) anpassbar ist und die Steuereinrichtung (3) in Abhängigkeit von Sensordaten (SD) Steuerdaten (CD) für die Automatisierungseinrichtung (2) erzeugt, wobei die Software in der Art einer Applikation (APP) implementiert ist, welche in Abhängigkeit von den Sensor- und Steuerdaten (Prozessdaten) (PD=SD+CD) Korrekturdaten (KD) zur Anpassung der Steuerungsparameter (P) und/oder des Steuerungsalgorithmus (ALG) erzeugt, wobei das Verfahren umfasst:
Ausführen (S101) einer aktualisierten oder veränderten Version der Applikation (APP*) in einem abgesicherten Bereich (5) einer Datenverarbeitungseinrichtung (4) mit historischen Prozessdaten (hPD) zum Erzeugen von Prüfkorrekturdaten (KD*) ;
Vergleichen (S102) der Prüfkorrekturdaten (KD*) mit von der Applikation (APP) erzeugten Korrekturdaten (KD), welche mit Hilfe der Applikation (APP) aus den historischen Prozessdaten (hPD) erzeugt wurden, zum Erzeugen eines Vergleichsergebnisses; und
Austauschen (S103) der Applikation (APP) mit der aktualisierten oder veränderten Version der Applikation (APP*) in Abhängigkeit von dem Vergleichsergebnis und Betreiben des Automatisierungssystems (1) mit der aktualisierten oder veränderten Version der Applikation (APP*).

2. Verfahren nach Anspruch 1,
**dadurch gekennzeichnet,**
**dass** die Datenverarbeitungseinrichtung (4) ein Edge-Gerät umfasst.

3. Verfahren nach Anspruch 1 oder 2,
**dadurch gekennzeichnet,**
**dass** die Steuereinrichtung (3) ein Feldgerät, insbesondere eine speicherprogrammierbare Steuerung (SPS), umfasst.

4. Verfahren nach einem der Ansprüche 1 bis 3,
**dadurch gekennzeichnet,**
**dass** der abgesicherte Bereich (5) als ein unabhängiger Softwareprozess, als eine Sandbox, als ein Container oder als eine virtuelle Maschine ausgebildet wird.

5. Verfahren nach einem der Ansprüche 1 bis 4, ferner umfassend:
Ausführen der Applikation (APP) zum Erzeugen von Korrekturdaten (KD) mit Hilfe der Datenverarbeitungseinrichtung (4), insbesondere in dem abgesicherten Bereich (5) oder in einem weiteren abgesicherten Bereich (6).

6. Verfahren nach einem der Ansprüche 1 bis 5,
**dadurch gekennzeichnet,**
**dass** die aktualisierte oder veränderte Version der Applikation (APP*) und die Applikation (APP) gleichzeitig ausgeführt werden.

7. Verfahren nach einem der Ansprüche 1 bis 6, ferner umfassend:
Herunterladen, der aktualisierten oder veränderten Version der Applikation (APP*) von einem Cloud-Server (15) auf die Datenverarbeitungseinrichtung (4).

8. Verfahren nach Anspruch 7, ferner umfassend:
Erzeugen der aktualisierten oder veränderten Version der Applikation (APP*) auf dem Cloud-Server (15) mit Hilfe historischer Prozessdaten (hPD) unter Anwendung eines Algorithmus zum Maschinellen Lernen.

9. Verfahren nach einem der Ansprüche 1 bis 8,
**dadurch gekennzeichnet,**
**dass** das Automatisierungssystem (1) die Automatisierungseinrichtung (2), die Steuereinrichtung (3) und Sensoreinrichtungen mit jeweils Ein- und/oder Ausgabeanschlüssen für Sensor- und/oder Steuerdaten (SD, CD) aufweist, und die Prozessdaten (PD) zumindest eine Auswahl der an den Ein- und Ausgangsanschlüssen abgreifbaren Sensordaten (SD) umfassen.

10. Verfahren nach einem der Ansprüche 1 bis 9, ferner umfassend:
Speichern der während eines Betriebes des Automatisierungssystems (1) erzeugten Prozessdaten (PD) als die historischen Prozessdaten (hPD).

11. Verfahren nach Anspruch 10,
**dadurch gekennzeichnet,**
**dass** die historischen Prozessdaten (hPD) mit Hilfe eines SCADA-Servers oder eines lokalen Datenpuffers der Steuereinrichtung (3) oder der Datenverarbeitungseinrichtung (4) gespeichert werden.

12. Verfahren nach einem der Ansprüche 1 bis 11, ferner umfassend, insbesondere nach dem Vergleichen der Korrekturdaten (KD) mit den Prüfkorrekturdaten (KD*) :
Ausführen der Applikation (App) mit einem ersten Teil von aktuellen Prozessdaten (PD) zum Erzeugen aktueller Korrekturdaten (KD) ;
Ausführen der aktualisierten oder veränderten Applikation (APP*) mit einem zweiten Teil der aktuellen Prozessdaten (PD) zum Erzeugen aktueller Prüfkorrekturdaten (KD*) ; und
Anpassen der Steuerungsparameter (P) und/oder des Steuerungsalgorithmus (ALG) gemäß der jeweils aktuellen Korrekturdaten (KD) beziehungsweise Prüfkorrekturdaten (KD*).

13. Verfahren nach Anspruch 12,
**dadurch gekennzeichnet,**
**dass** schrittweise, insbesondere in vorgebbaren Zeitschritten, der erste Teil der aktuellen Prozessdaten (PD) verringert wird und der zweite Teil von aktuellen Prozessdaten (PD) vergrößert wird.

14. Verfahren nach Anspruch 12 oder 13, ferner umfassend:
Erfassen mindestens eines Leistungsparameters der gesteuerten Automatisierungseinrichtung (2); und
Vergleichen des erfassten Leistungsparameters während der Verwendung des ersten Teils und des zweiten Teils der aktuellen Prozessdaten (PD).

15. Computerprogrammprodukt, welches auf einer programmgesteuerten Einrichtung, insbesondere auf einer einem Automatisierungssystems (1) zugeordneten Datenverarbeitungseinrichtung (4), die Durchführung des Verfahrens nach einem der Ansprüche 1 - 14 veranlasst.

16. Steuereinrichtung (3) für ein Automatisierungssystem (1) mit zumindest einer Automatisierungseinrichtung (2),
wobei die Steuereinrichtung eingerichtet ist, einen Steuerungsalgorithmus (ALG) zum Erzeugen von Steuerdaten (SD) für die Automatisierungseinrichtung (2) in Abhängigkeit von Sensordaten (SD) auszuführen, wobei der Steuerungsalgorithmus (ALG) durch Steuerungsparameter (P) anpassbar ist,
mit einer Datenverarbeitungseinrichtung (4) zum Ausführen einer in der Art einer Applikation (APP) implementierten Software, welche in Abhängigkeit von den Sensor- und Steuerdaten (Prozessdaten) (PD=SD+CD) Korrekturdaten (KD) zur Anpassung des Steuerungsalgorithmus (ALG) erzeugt;
wobei die Datenverarbeitungseinrichtung (4) ferner eingerichtet ist:
zum Ausführen einer aktualisierten oder veränderten Version der Applikation (APP*) in einem abgesicherten Bereich (5) der Datenverarbeitungseinrichtung (4) mit historischen Prozessdaten (hPD) zum Erzeugen von Prüfkorrekturdaten (KD*) ;
zum Vergleichen der Prüfkorrekturdaten (KD*) mit von der Applikation (APP) erzeugten Korrekturdaten (KD), welche mit Hilfe der Applikation (APP) aus den historischen Prozessdaten (hPD) erzeugt wurden, und
zum Austauschen der Applikation (APP) mit der aktualisierten oder veränderten Version der Applikation (APP*) in Abhängigkeit von dem Vergleichsergebnis.

17. Steuereinrichtung nach Anspruch 16, wobei die Steuereinrichtung und/oder die Datenverarbeitungseinrichtung eingerichtet ist, ein Verfahren nach einem der Ansprüche 1 - 15 durchzuführen.

18. Automatisierungssystem (1) mit einer Steuereinrichtung (3) nach Anspruch 16 oder 17.
